# DEMANDE DE BREVET EUROPEEN

(11) **EP 1 936 934 A1**
(43) Date de publication de la demande: **25.06.2008**
(21) Numéro de dépôt: 07123737.4
(22) Date de dépôt: 19.12.2007
(51) Int. Cl.: H04M 3/51

(54) **Procédé de diffusion d'un flux depuis une plate-forme de service, produit programme d'ordinateur et plate-forme de service correspondants**

(30) Priorité: 19.12.2006 FR 0611080
(71) Demandeur: FRANCE TELECOM, 75015 Paris (FR)
(72) Inventeur: Vilain, Arnaud, 75015, Paris (FR); De Snoeck, Xavier, 75001, Paris (FR)
(74) Mandataire: Guéné, Patrick Lucien Juan Joseph

(57) **Abrégé**

Il est proposé procédé de diffusion d'un flux depuis une plate-forme de service (8) vers au moins un terminal client (1), comprenant les étapes suivantes, effectuées par la plate-forme de service, pour ledit au moins un terminal client : - réception d'un appel dudit terminal client ; - création d'une entrée spécifique au terminal client dans une table d'état, ladite entrée associant un identifiant du terminal client avec un état « en qualification » ; - si aucun agent n'est disponible pour l'appel du terminal client après qualification de l'appel du terminal client : * encodage, dans un format adapté au terminal client et sélectionné parmi au moins deux formats d'encodage distincts, d'un flux fourni à la plate-forme de service via une communication établie entre la plate-forme de service et un unique serveur de contenu (6), ledit encodage permettant d'obtenir un flux adapté ; * transmission du flux adapté au terminal client, via une communication établie entre la plate-forme de service et le terminal client ; * modification dans la table d'état de l'entrée spécifique au terminal client, en remplaçant l'état « en qualification » par un état « en attente sans communication préalable ».

## Description

### 1. DOMAINE DE L'INVENTION

Le domaine de l'invention est celui des centres de contacts, aussi appelés centres de relation client ou centres d'appels. Ils sont qualifiés de multimédia lorsque les modalités de contacts ne sont pas simplement téléphoniques mais multimédia (Internet, bornes interactives...). Ils sont également appelés, en anglais, « Web call centers » lorsque l'information transite par l'Internet (par courriel ou chat). Ils permettent à des agents (aussi appelés conseillers ou téléacteurs) de gérer à distance les besoins de la clientèle (qui utilise des terminaux client).

Plus précisément, l'invention concerne une technique de diffusion d'un flux, lors d'une phase d'attente, depuis une plate-forme de service d'un centre de contacts multimédia vers au moins un terminal client (terminal du client final).

On rappelle qu'un client qui joint un centre de contacts peut être mis en attente multimédia en attendant qu'un agent disposant des compétences requises pour traiter son appel se libère. Cette phase d'attente se déroule :
- soit après une phase de qualification de l'appel, pour un nouvel appel qui arrive sur le centre de contacts (et qui n'a donc pas encore été traité),
- soit lors d'une phase de transfert accompagné, c'est-à-dire lorsqu'un appel déjà traité par un premier agent doit être transféré vers un second agent et est mis en attente jusqu'à ce que ce second agent soit disponible.

### 2. ART ANTÉRIEUR

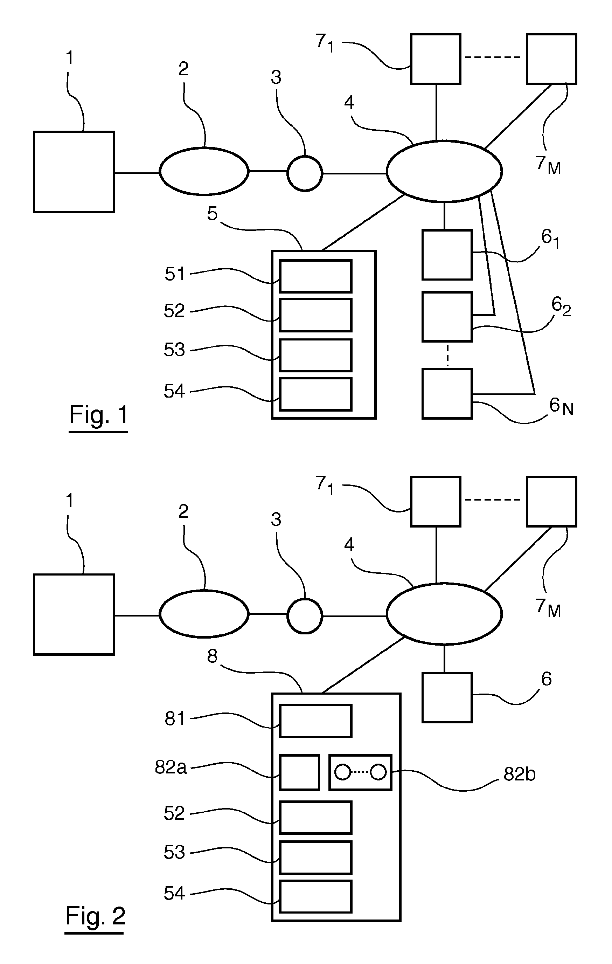

On présente maintenant, en relation avec la **figure 1****,** un exemple de système selon l'art antérieur, permettant la diffusion de flux multimédia depuis un centre de contacts vers un terminal client, lors d'une phase d'attente. Ce système comprend de façon classique :
- une pluralité de terminaux client, IP ou non. Dans un seul souci de simplification, un seul terminal client 1 est représenté sur la figure 1. Par abus de langage, on assimile parfois dans la présente description les clients aux terminaux client ;
- un réseau d'accès 2 ;
- une passerelle 3 entre le réseau d'accès 2 et le réseau IP 4 ;
- le réseau IP 4, basé sur protocole IP sur lequel s'appuie le centre de contacts ;
- le centre de contact proprement dit, comprenant :
   * une plate-forme de service 5 ;
   * une pluralité de serveurs de contenus 6₁ à 6_{N} (par exemple des serveurs de streaming, permettant de fournir en continu le flux multimédia d' attente) ; et
   * une pluralité d'agents 7₁ à 7_{M} (par abus de langage on assimile dans la présente description les agents aux terminaux d'agents).

La plate-forme de service 5 comprend elle-même :
- un serveur multimédia interactif 51, permettant de qualifier et gérer les appels entrants des terminaux client ;
- un serveur de distribution des appels 52 (ou serveur ACD, pour « Automatic Call Distribution » en anglais) ;
- un serveur de connexion des agents 53 ; et
- un serveur de statistiques 54.

On présente maintenant brièvement le fonctionnement de ce système classique d'abord dans le cas d'une mise en attente d'un nouvel appel, puis dans le cas d'une mise en attente d'un appel lors d'un transfert accompagné.

Dans le cas d'une mise en attente d'un nouvel appel, le client 1 appelle le centre de contacts. Le serveur multimédia interactif 51 qualifie son appel. Si aucun agent adapté n'est disponible, le serveur multimédia interactif 51 (ou un autre élément du centre de contacts) invoque parmi les serveurs de contenus 6₁ à 6_{N} celui qui fournit un flux multimédia d'attente adapté aux capacités du terminal client 1 (dans une variante, le serveur multimédia interactif 51 stocke localement le flux multimédia d'attente). Puis, le serveur multimédia interactif 51 diffuse le flux multimédia d'attente vers le terminal client 1, au travers de deux communications (aussi appelées sessions) établies l'une entre le serveur de contenus précédemment invoqué et le serveur multimédia interactif 51, l'autre entre le serveur multimédia interactif 51 et le terminal client 1. Quand l'un des agents 7₁ à 7_{M} se libère, le serveur multimédia interactif 51 en est informé. Il demande alors au serveur de contenus précédemment invoqué l'arrêt de la diffusion du flux multimédia d'attente (ou, dans la variante, arrête la diffusion du flux multimédia stocké localement). Puis, le serveur multimédia interactif 51 distribue la communication vers l'agent disponible, c'est-à-dire d'une part met fin à la communication entre le serveur de contenus précédemment invoqué et le serveur multimédia interactif 51, et d'autre part transfère vers l'agent disponible la communication entre le serveur multimédia interactif 51 et le terminal client 1 (ouverture d'une nouvelle communication entre le terminal client 1 et l'agent disponible).

Dans le cas d'une mise en attente d'un appel lors d'un transfert accompagné, un premier agent en communication avec un client 1 décide de transférer l'appel (c'est-à-dire cette communication) à un second agent. Le premier agent route donc la communication entre le client 1 et le premier agent vers le serveur multimédia interactif 51. Ce dernier invoque parmi les serveurs de contenus 6₁ à 6_{N} celui qui fournit un flux multimédia d'attente adapté aux capacités du terminal client 1 (dans une variante, le serveur multimédia interactif 51 stocke localement le flux multimédia d'attente). Puis, le serveur multimédia interactif 51 diffuse le flux multimédia d'attente vers le terminal client 1, au travers de deux communications (aussi appelées sessions) établies l'une entre le serveur de contenus précédemment invoqué et le serveur multimédia interactif 51, l'autre entre le serveur multimédia interactif 51 et le terminal client 1. Quand le second agent est disponible pour le transfert précité, le serveur multimédia interactif 51 en est informé. Il demande alors au serveur de contenus précédemment invoqué l'arrêt de la diffusion du flux multimédia d'attente (ou, dans la variante, arrête la diffusion du flux multimédia stocké localement). Puis, le serveur multimédia interactif 51 effectue le transfert vers le second agent, c'est-à-dire d'une part met fin à la communication entre le serveur de contenus précédemment invoqué et le serveur multimédia interactif 51, et d'autre part transfère vers le second agent disponible la communication entre le serveur multimédia interactif 51 et le terminal client 1 (ouverture d'une nouvelle communication entre le terminal client 1 et le second agent disponible).

La technique actuelle rappelée ci-dessus présente plusieurs inconvénients.

Elle implique que pour chaque client mis en attente, soit au départ, soit lors d'un transfert accompagné, soit encore lors d'un transfert dit "à l'aveugle", c'est-à-dire sans vérification préalable de la disponibilité de la personne à laquelle le client doit être transféré, le serveur multimédia interactif 51 doit ouvrir une nouvelle communication avec l'un des serveurs de contenus 6₁ à 6_{N} et router le flux multimédia d'attente venant de ce serveur de contenu vers le client mis en attente. Pour chaque client en attente, une communication entre le serveur multimédia interactif 51 et un serveur de contenu est ouverte. Donc un port multimédia (par exemple un port vidéo) du serveur multimédia interactif 51, côté sortie vers les serveurs de contenus, est consommé, sans compter la bande passante (du réseau IP 4) et la puissance processeur (du serveur multimédia interactif 51) nécessaires à chaque relais de flux multimédia effectué par le serveur multimédia interactif 51. Le nombre maximal de clients pouvant être mis en attente simultanément est donc limité au nombre de ports multimédia pouvant être ouverts simultanément en sortie du serveur multimédia interactif 51, côté serveurs de contenus.

En outre, la pluralité de serveurs de contenus 6₁ à 6_{N} est nécessaire si on cherche à rendre le service de mise en attente de manière optimale pour plusieurs types de terminaux clients (téléphone, TV, visiophone...) ayant des capacités différentes. En effet, chaque serveur de contenu fournit un flux multimédia d'attente adapté à un type de terminal client visé.

Par ailleurs, une même communication (session) est utilisée entre le serveur multimédia interactif 51 et le client 1 pour les flux de qualification et d'attente, ce qui ne facilite pas l'émission de tickets pour la facturation. En d'autres termes, il n'est pas aisé pour l'opérateur du centre de contacts de mettre en oeuvre une facturation fiable et conforme à la législation, puisqu'il est difficile de distinguer les phases non facturables de qualification et de première attente (immédiatement après qualification), de la phase facturable d'attente ultérieure (lors d'un transfert accompagné).

### 3. EXPOSÉ DE L'INVENTION

L'invention propose un procédé de diffusion d'un flux depuis une plate-forme de service vers au moins un terminal client, comprenant les étapes suivantes mise en oeuvre par la plate-forme de service:
- une étape de réception d'un appel dudit terminal client; et
- une étape de mise en attente du terminal client
ladite étape de mise en attente comportant :
- une étape d'encodage dans un format adapté au terminal client et sélectionné parmi au moins deux formats d'encodage distincts, d'un flux fourni à la plate-forme de service via une communication établie entre la plate-forme de service et un serveur de contenu, ledit encodage permettant d'obtenir un flux adapté au terminal client,
- une étape de transmission du flux adapté au terminal client, via une communication établie entre la plate-forme de service et le terminal client.

Ainsi, l'invention repose sur une approche tout à fait nouvelle et inventive de la diffusion d'un flux (par exemple, d'un flux multimédia d'attente). En effet, le principe général de l'invention consiste à faire coopérer la plate-forme de service avec un serveur de contenu (source de flux multimédia), grâce à des moyens d'encodage selon plusieurs formats d'encodage distincts. La plate-forme de service effectue donc un encodage adapté (c'est-à-dire une adaptation du flux d'attente aux capacités d'un terminal client).

Dans un mode de réalisation, la communication est établie entre la plate-forme de service et un unique serveur de contenu.

De ce fait, il y aura un seul port multimédia ouvert sur un serveur frontal (par exemple le serveur multimédia interactif) compris dans la plate-forme de service, côté serveur de contenu.

Quel que soit le nombre de terminaux client mis en attente, une seule communication est nécessaire entre la plate-forme de service (et plus précisément par exemple le serveur multimédia interactif compris dans cette plate-forme) et l'unique serveur de contenu. Il y a donc une optimisation des ressources de communication du réseau (réseau IP dans l'exemple de la figure 1) via lequel sont interconnectés la plate-forme de service et le serveur de contenu.
Dans un mode de réalisation, le procédé est caractérisé en ce qu'il comprend les étapes suivantes, effectuées suite à la réception dudit appel:
- une étape de création d'une entrée spécifique audit terminal client dans une table d'état, ladite entrée associant un identifiant dudit terminal client avec un état « en qualification » ;
- si un agent n'est pas disponible pour ledit appel après qualification dudit appel, une étape de modification dans ladite table d'état de ladite entrée spécifique audit terminal client, en remplaçant ledit état « en qualification » par un état « en attente sans communication préalable »,
et en ce que ladite étape de mise en attente est mise en oeuvre lorsque le terminal client est dans l'état « en attente sans communication préalable ».
Dans un mode de réalisation, le procédé est caractérisé en ce qu'il comprend les étapes suivantes, mises en oeuvre si un agent est disponible après que l'entrée spécifique au terminal client a été mise dans l'état « en attente sans communication préalable » :
* une étape d'arrêt de la transmission du flux adapté au terminal client, via la communication établie entre la plate-forme de service et le terminal client ;
* une étape d'établissement d'une communication entre le terminal client et l'agent;
* une étape de modification dans la table d'état de l'entrée spécifique au terminal client, en remplaçant l'état « en attente sans communication préalable » par un état « en communication ».

La table d'état permet de distinguer des phases successives du traitement d'un appel client.
Dans un mode de réalisation, le procédé est caractérisé en ce qu'il comprend les étapes suivantes, mises en oeuvre si une communication établie entre le terminal client et un agent disponible est transférée vers un autre agent, après que l'entrée spécifique au terminal client a été mise dans l'état « en communication » :
* une étape de transmission dudit flux adapté au terminal client, via une communication établie entre la plate-forme de service et le terminal client ;
* une étape de modification dans la table d'état de l'entrée spécifique au terminal client, en remplaçant l'état « en communication » par un état « en attente après communication préalable » ;

Enfin, la table d'état permet de distinguer, pour un terminal client, la phase de qualification, la phase d'attente sans communication préalable (c'est-à-dire la phase de première attente, immédiatement après qualification) et la phase d'attente après communication préalable. Ceci facilite l'émission de tickets différents pour la facturation des différentes phases.
Dans un mode de réalisation, le procédé est caractérisé en ce que l'étape de transmission du flux adapté au terminal client est précédée d'une étape d'envoi au terminal client d'une requête contenant une adresse d'un port d'un serveur multimédia interactif, ledit port étant compris dans la plate-forme de service, port sur lequel le terminal client doit se connecter pour recevoir ledit flux adapté.
L'invention se rapporte aussi à une plate-forme de service comprenant
- des moyens de réception d'un appel d'un terminal client; et
- des moyens de mise en attente du terminal client, lesdits moyens de mise en attente du terminal client comportant:
   - des moyens d'encodage dans un format adapté au terminal client et sélectionné parmi au moins deux formats d'encodage distincts, d'un flux fourni à la plate-forme de service via une communication établie entre la plate-forme de service et un serveur de contenu, ledit encodage permettant d'obtenir un flux adapté au terminal client,
- des moyens de transmission du flux adapté au terminal client, via une communication établie entre la plate-forme de service et le terminal client.
Dans un mode de réalisation, la plate-forme de service est caractérisée en ce qu'elle comprend un unique port destiné à être connecté audit serveur de contenu.
Ceci présente les avantages comme déjà évoquées ci-dessus.
Dans un mode de réalisation la plate-forme de service est caractérisée en ce qu'elle comporte:
- des moyens de création d'une entrée spécifique audit terminal client dans une table d'état, ladite entrée associant un identifiant dudit terminal client avec un état « en qualification », lesdits moyens étant mis en oeuvre suite à la réception d'un appel client,
- des moyens de modification dans ladite table d'état de ladite entrée spécifique audit terminal client, en remplaçant ledit état « en qualification » par un état « en attente sans communication préalable », lesdits moyens de modification étant mis en oeuvre si un agent n'est pas disponible pour ledit appel après qualification dudit appel,
- des moyens d'activation des moyens de mise en attente du terminal client lorsque le terminal est dans l'état « en attente sans communication préalable ».
L'invention se rapporte également à un système de télécommunications comportant au moins un terminal client, un serveur de contenu, et une plate-forme de service comme décrit ci-dessus.
L'invention se rapporte également à un programme d'ordinateur, comprenant des instructions pour l'exécution du procédé comme décrit ci-dessus lorsque ledit programme est exécuté sur un processeur.

Comme précisé ci-après, il est également proposé diverses caractéristiques avantageuses, liées à la gestion de la table d'état, et aux états pouvant être pris par chaque entrée spécifique à un terminal client. Ces caractéristiques peuvent être combinées ou non, selon les modes de réalisation de l'invention.
L'invention propose également un procédé de diffusion d'un flux depuis une plate-forme de service vers au moins un terminal client, ce procédé comprenant les étapes suivantes, effectuées par la plate-forme de service, pour ledit au moins un terminal client :
- réception d'un appel dudit terminal client ;
- création d'une entrée spécifique au terminal client dans une table d'état, ladite entrée associant un identifiant du terminal client avec un état « en qualification » ;
- si aucun agent n'est disponible pour l'appel du terminal client après qualification de l'appel du terminal client :
   * encodage, dans un format adapté au terminal client et sélectionné parmi au moins deux formats d'encodage distincts, d'un flux fourni à la plate-forme de service via une communication établie entre la plate-forme de service et un unique serveur de contenu, ledit encodage permettant d'obtenir un flux adapté ;
   * transmission du flux adapté au terminal client, via une communication établie entre la plate-forme de service et le terminal client ;
   * modification dans la table d'état de l'entrée spécifique au terminal client, en remplaçant l'état « en qualification » par un état « en attente sans communication préalable ».

De façon avantageuse, le procédé comprend l'étape suivante, effectuée par la plate-forme de service, pour ledit au moins un terminal client :
- si un agent est disponible pour l'appel du terminal client après qualification de l'appel du terminal client :
   * transfert de l'appel du terminal client vers l'agent disponible et établissement d'une communication entre le terminal client et l'agent disponible ;
   * modification dans la table d'état de l'entrée spécifique au terminal client, en remplaçant l'état « en qualification » par un état « en communication ».

Avantageusement, le procédé comprend l'étape suivante, effectuée par la plate-forme de service, pour ledit au moins un terminal client :
- si un agent devient disponible après que l'entrée spécifique au terminal client a été mise dans l'état « en attente sans communication préalable » :
   * arrêt de la transmission du flux adapté au terminal client, via la communication établie entre la plate-forme de service et le terminal client ;
   * établissement d'une communication entre le terminal client et l'agent disponible ;
   * modification dans la table d'état de l'entrée spécifique au terminal client, en remplaçant l'état « en attente sans communication préalable » par un état « en communication ».

Selon une caractéristique avantageuse, le procédé comprend l'étape suivante, effectuée par la plate-forme de service, pour chaque terminal client :
- si une communication établie entre le terminal client et un agent disponible se termine, après que l'entrée spécifique au terminal client a été mise dans l'état « en communication » :
   * suppression dans la table d'état de l'entrée spécifique au terminal client.

De façon avantageuse, le procédé comprend l'étape suivante, effectuée par la plate-forme de service, pour ledit au moins un terminal client :
- si une communication établie entre le terminal client et un agent disponible est transférée à l'aveugle vers un autre agent, après que l'entrée spécifique au terminal client a été mise dans l'état « en communication » :
   * arrêt de la communication établie entre le terminal client et l'agent disponible ;
   * établissement d'une communication entre le terminal client et l'autre agent, s'il est disponible ;
   * maintien dans la table d'état de l'entrée spécifique au terminal client dans l'état « en communication ».

Selon une caractéristique avantageuse, le procédé comprend les étapes suivantes, effectuées par la plate-forme de service, pour ledit au moins un terminal client :
- si une communication établie entre le terminal client et un agent disponible est transférée de façon accompagnée vers un autre agent, après que l'entrée spécifique au terminal client a été mise dans l'état « en communication » :
   * transmission dudit flux adapté au terminal client, via une communication établie entre la plate-forme de service et le terminal client ;
   * modification dans la table d'état de l'entrée spécifique au terminal client, en remplaçant l'état « en communication » par un état « en attente après communication préalable » ;
- si ledit autre agent est disponible après que l'entrée spécifique au terminal client a été mise dans l'état « en attente après communication préalable » :
   * arrêt de la transmission du flux adapté au terminal client, via la communication établie entre la plate-forme de service et le terminal client ;
   * établissement d'une communication entre le terminal client et l'autre agent disponible ;
   * modification dans la table d'état de l'entrée spécifique au terminal client, en remplaçant l'état « en attente après communication préalable » par l'état « en communication ».

Ainsi, la table d'état permet également de distinguer, pour chaque terminal client, la phase d'attente sans communication préalable (c'est-à-dire la phase de première attente, immédiatement après qualification), non facturable, de la phase d'attente après communication préalable (c'est-à-dire la phase d'attente ultérieure, lors d'un transfert accompagné), facturable. Ceci facilite aussi l'émission de tickets pour la facturation.

Avantageusement, le procédé comprend l'étape suivante, effectuée par la plate-forme de service, pour ledit au moins un terminal client :
- si le terminal client se déconnecte et met fin à la communication établie entre la plate-forme de service et le terminal client, après que l'entrée spécifique au terminal client a été mise dans l'état « en attente sans communication préalable » ou dans l'état « en attente après communication préalable » :
   * suppression dans la table d'état de l'entrée spécifique au terminal client.

De façon avantageuse, l'étape de transmission du flux adapté au terminal client, via une communication établie entre la plate-forme de service et le terminal client, est précédée de l'étape suivante, effectuée par la plate-forme de service :
- envoi au terminal client d'une requête contenant une adresse d'un port d'un serveur multimédia interactif compris dans la plate-forme de service, port sur lequel le terminal client doit se connecter pour recevoir ledit flux adapté.

Dans un autre mode de réalisation de l'invention, il est proposé un produit programme d'ordinateur téléchargeable depuis un réseau de communication et/ou enregistré sur un support lisible par ordinateur et/ou exécutable par un processeur, ce produit programme d'ordinateur comprenant des instructions de code de programme pour l'exécution des étapes du procédé précité (selon au moins un de ses différents modes de réalisation), lorsque ledit programme est exécuté sur un ordinateur.

Dans encore un autre mode de réalisation de l'invention, il est proposé une plate-forme de service permettant la diffusion d'un flux vers au moins un terminal client, et comprenant :
- des moyens de réception d'un appel d'un terminal client donné;
- des moyens de création d'une entrée spécifique au terminal client donné dans une table d'état, ladite entrée associant un identifiant du terminal client donné avec un état « en qualification » ;
- des moyens d'encodage, dans un format adapté au terminal client donné et sélectionné parmi au moins deux formats d'encodage distincts, d'un flux fourni à la plate-forme de service via une communication établie entre la plate-forme de service et un unique serveur de contenu, lesdits moyens d'encodage permettant d'obtenir un flux adapté ;
- des moyens de transmission du flux adapté au terminal client, via une communication établie entre la plate-forme de service et le terminal client ;
- des moyens de modification, dans la table d'état, de l'entrée spécifique au terminal client, en remplaçant l'état « en qualification » par un état « en attente sans communication préalable » ;
- des moyens de détection, permettant de détecter si un agent est disponible pour l'appel du terminal client donné ;
lesdits moyens d'encodage, de transmission et de modification étant activés si lesdits moyens de détection détectent qu'aucun agent n'est disponible pour l'appel du terminal client donné après qualification de l'appel du terminal client.

Plus généralement, la plate-forme de service selon un mode de réalisation de l'invention comprend des moyens de mise en oeuvre du procédé de diffusion tel que décrit précédemment, dans l'un quelconque de ses différents modes de réalisation.

### 4. LISTE DES FIGURES

D'autres caractéristiques et avantages de modes de réalisation de l'invention apparaîtront à la lecture de la description suivante, donnée à titre d'exemple indicatif et non limitatif (tous les modes de réalisation de l'invention ne sont pas limités aux caractéristiques et avantages des modes de réalisation décrits ci-après), et des dessins annexés, dans lesquels :
- la figure 1 présente un synoptique d'un exemple de système selon l'art antérieur, permettant la diffusion de flux multimédia d'attente depuis un centre de contacts vers un terminal client ;
- la figure 2 présente un synoptique d'un système selon un mode de réalisation particulier de l'invention permettant la diffusion de flux multimédia d'attente depuis un centre de contacts vers un terminal client ; et
- la figure 3 présente un organigramme d'un mode de réalisation particulier du procédé selon l'invention de diffusion d'un flux multimédia d'attente par une plate-forme de service d'un centre de contacts multimédia.

### 5. DESCRIPTION DÉTAILLÉE

La figure 1, relative à l'art antérieur, a déjà été décrite ci-dessus.

On présente maintenant, en relation avec la **figure 2****,** un système selon un mode de réalisation particulier de l'invention permettant la diffusion de flux multimédia d'attente depuis un centre de contacts vers un terminal client.

Dans ce mode de réalisation particulier, le système comprend des éléments identiques à ceux compris dans le système de l'art antérieur illustré sur la figure 1, à savoir (les éléments identiques sur les figures 1 et 2 sont désignés par une même référence numérique) : un terminal client 1, un réseau d'accès 2, une passerelle 3, un réseau IP 4 et un centre de contacts proprement dit.

Ce centre de contacts comprend un serveur de contenus 6, une plate-forme de service (référencée ici 8) et une pluralité d'agents 7₁ à 7_{M}. Le serveur de contenus 6 est par exemple un serveur de streaming diffusant en continu un seul flux multimédia d'attente (au format optimal, c'est-à-dire de qualité maximale).

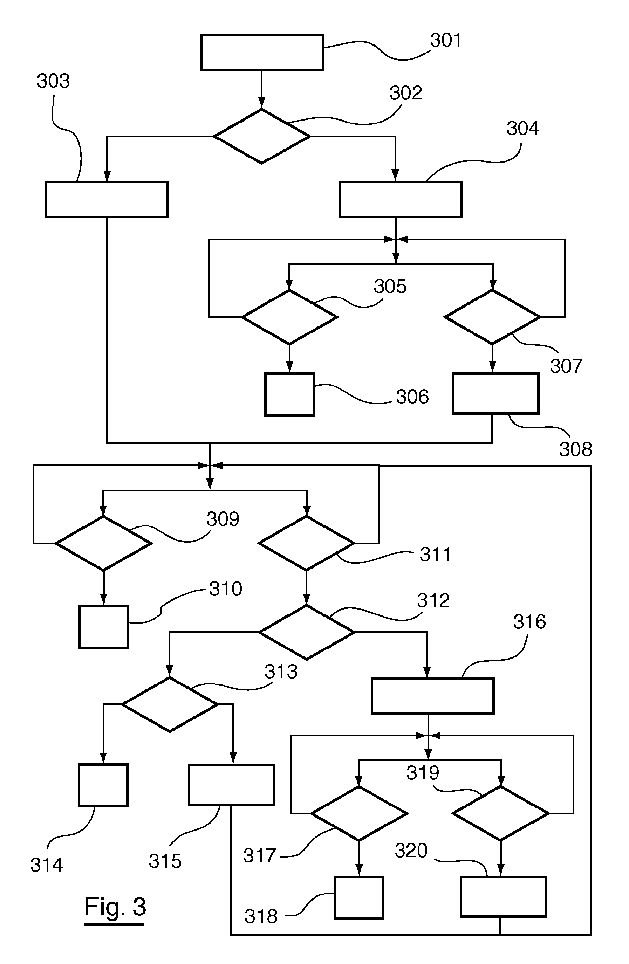

La plate-forme de service 8 comprend :
- un serveur multimédia interactif 81, permettant de qualifier les appels entrants et gérer une table d'état pour contrôler l'état des clients. Ce serveur multimédia 81 met par exemple en oeuvre le mode de réalisation particulier du procédé selon l'invention de diffusion d'un flux multimédia d'attente, décrit ci-après en relation avec la figure 3. Cette mise en oeuvre peut être informatique (programme(s) d'ordinateur exécuté(s) par (au moins) un processeur) ;
- un module assurant une fonction de « relais de streaming » 82a (ce module est par exemple réalisé par un programme d'ordinateur exécuté par un processeur), coopérant avec une batterie de codecs 82b adaptés aux capacités des terminaux client visés ;
- un serveur ACD 52;
- un serveur de connexion des agents 53; et
- un serveur de statistiques 54.

En particulier, pour mettre le client en attente, le serveur multimédia interactif 81 comprend des moyens de mise en attente et de moyens d'activation de ces moyens de mise en attente. Le serveur multimédia interactif 81 comprend aussi des moyens de création d'une entrée spécifique au terminal client dans la table d'état ainsi que des moyens de modification dans la table d'état de l'entrée spécifique au terminal client.

Dans cet exemple, la plate-forme de service 8 est enregistrée auprès du serveur de contenus 6 comme client, et donc elle reçoit en continu le flux multimédia. En outre, le serveur de contenus 6 fournit le flux multimédia dans un seul format, de la meilleure qualité qui soit.

On notera que la mise en oeuvre, par le serveur multimédia interactif 81, du procédé selon l'invention de diffusion d'un flux multimédia d'attente, ne se limite pas à une implantation purement logicielle (séquence d'instructions d'un programme informatique exécutée par au moins un processeur). Il peut aussi s'agir d'une mise en oeuvre sous une forme matérielle ou toute forme mixant une partie matérielle et une partie logicielle. Dans le cas où la mise en oeuvre est partiellement ou totalement sous forme logicielle, la séquence d'instructions correspondante pourra être stockée dans un moyen de stockage amovible (tel que par exemple une disquette, un CD-ROM ou un DVD-ROM) ou non amovible, ce moyen de stockage étant lisible partiellement ou totalement par un ordinateur ou un microprocesseur.

On présente maintenant, en relation avec la **figure 3****,** un mode de réalisation particulier du procédé selon l'invention de diffusion d'un flux multimédia d'attente par une plate-forme de service d'un centre de contacts multimédia. Il s'agit donc d'un exemple de fonctionnement du système décrit ci-dessus en relation avec la figure 2.

Dans une étape 301, la plate-forme de service 8 reçoit un appel du client 1, qui accède au travers du réseau d'accès 2, la passerelle 3 et le réseau IP 4. Puis, la plate-forme de service 8 récupère un identifiant du client 1 (par exemple son adresse IP ou son « call-id »). Elle crée dans la table d'état une entrée spécifique à ce client, associant l'identifiant du client avec un état « en qualification ». La plate-forme de service 8 récupère par la même occasion des informations sur le type de terminal client qui se connecte (par exemple grâce à un champ de la requête de connexion que le terminal envoie au centre de contacts. Il s'agit par exemple du champ « user-agent » que l'on retrouve dans les en-têtes http et qui contient une chaîne de caractères spécifiant notamment le type de navigateur utilisé par le terminal client). Enfin, la plate-forme de service 8 qualifie l'appel du client (pendant la phase de qualification, le client doit indiquer pourquoi il appelle, par exemple en appuyant sur des touches de son téléphone).

Dans une étape 302, la plate-forme de service 8 détecte si un agent disposant des compétences requises pour répondre à l'appel du client 1 est disponible.

Si un agent est disponible, on passe à l'étape 303, dans laquelle l'appel du client est transféré vers l'agent disponible, avec établissement d'une communication entre le client 1 et l'agent disponible. La plate-forme de service 8 modifie, dans sa table d'état, l'entrée spécifique au client 1, en remplaçant l'état « en qualification » par l'état « en communication ».

Si aucun agent n'est disponible, on passe à une étape 304 de mise en attente du client. Au moment de la mise en attente du terminal, la plate-forme de service 8 connaît les capacités du terminal client 1 qui s'est connecté (grâce aux informations envoyées par le terminal client au cours de l'étape 301, et éventuellement en consultant une base de données listant les caractéristiques techniques exactes associées à ce type de terminal). Elle est alors capable d'encoder le flux multimédia streamé initial (fourni par le serveur de contenu 6) avec le bon codec (parmi la pluralité de codecs 82b), pour satisfaire au mieux aux capacités du terminal client 1. Par exemple, la plate-forme de service 8 envoie une requête au terminal client, qui contient l'adresse URL RTSP (pour « Real Time Streaming Protocol » en anglais ou « Protocole de transmission continue en temps réel » en français) à laquelle le terminal client doit se connecter pour recevoir le flux streamé adapté à ses besoins. Cette adresse URL RTSP est celle d'un port de sortie, côté client, du serveur multimédia interactif 81 compris dans la plate-forme de service 8. Le terminal client 1 exécute la requête RTSP vers la plate-forme de service 8, qui fournit en réponse le flux multimédia streamé adapté aux capacités du terminal client. Ainsi, dans cet exemple, on utilise le protocole normalisé RTSP (RFC 2326 « Real Time Streaming Protocol ») pour la transmission du flux streamé d'attente. Au lancement de la requête RTSP, la plate-forme de service 8 sait donc que le terminal client est mis en attente et peut donc mettre à jour l'entrée spécifique au terminal client 1 dans sa table d'état, en remplaçant l'état « en qualification » par l'état « en attente sans communication préalable ».

Au cours l'étape 304 de mise en attente du client le terminal client reçoit donc pendant une étape d'encodage comme expliqué dans le paragraphe précédent, un flux adapté à ce terminal. Ce flux adapté au terminal client lui est transmis, au cours d' une étape de transmission, via une communication établie entre la plate-forme de service et le terminal client.

Après l'étape 304 de mise en attente du client, la plate-forme de service 8 détecte dans l'étape 305 si le terminal client 1 se déconnecte du service pendant l'attente (elle le sait car elle est à l'origine du flux multimédia envoyé au client 1). Si c'est le cas, on passe à l'étape 306 dans laquelle la plate-forme de service 8 supprime l'entrée spécifique au terminal client 1 dans sa table d'état, et ce terminal client 1 est supprimé de l'algorithme de distribution des appels parmi les agents et de la file d'attente associée. Si le terminal client 1 était la dernière entité à recevoir le flux multimédia encodé de cette manière (c'est-à-dire avec ce codec), alors la plate-forme de service 8 arrête l'encodage dans ce format (elle continue en revanche à recevoir le flux multimédia venant du serveur de contenu 6).

Après l'étape 304 de mise en attente du client, la plate-forme de service 8 détecte dans l'étape 307 si un agent vient de se libérer pour traiter l'appel du terminal client 1. Si c'est le cas, on passe à l'étape 308 dans laquelle la plate-forme de service 8 arrête la diffusion du flux streamé adapté vers le terminal client 1. Si le terminal client 1 était la dernière entité à recevoir le flux multimédia encodé de cette manière (c'est-à-dire avec ce codec), alors la plate-forme de service 8 arrête l'encodage dans ce format (elle continue en revanche à recevoir le flux multimédia venant du serveur de contenu 6). L'agent disponible ouvre une session (c'est-à-dire établit une communication) avec le terminal client afin de traiter son appel. La plate-forme de service 8 est informée par l'agent de la mise en relation entre l'agent et le terminal client. Elle met alors à jour l'entrée spécifique au terminal client 1 dans sa table d'état, en remplaçant l'état « en attente sans communication préalable » par l'état « en communication ».

Après l'une des étapes 303 et 308 (décrites ci-dessus) ou l'une des étapes 315 et 320 (décrites ci-après), c'est-à-dire après que le terminal client a été mis en communication avec un agent, la plate-forme de service 8 détecte dans l'étape 309 si la communication entre l'agent et le terminal client est terminée (c'est l'agent qui informe la plate-forme de service 8 de cette fin de session). Si c'est le cas, on passe à l'étape 310 dans laquelle la plate-forme de service 8 supprime l'entrée spécifique au terminal client 1 dans sa table d'état.

Après l'une des étapes 303 et 308 (décrites ci-dessus) ou l'une des étapes 315 et 320 (décrites ci-après), c'est-à-dire après que le terminal client a été mis en communication avec un agent, la plate-forme de service 8 détecte dans l'étape 311 si le client doit être transféré vers un autre agent. Si c'est le cas, on passe à l'étape 312 dans laquelle la plate-forme de service 8 détecte s'il s'agit d'un transfert à l'aveugle ou accompagné (c'est-à-dire respectivement sans ou avec vérification préalable de la disponibilité de l'autre agent).

S'il s'agit d'un transfert à l'aveugle, on passe à l'étape 313 dans laquelle la plate-forme de service 8 détecte si l'autre agent est disponible. Si l'autre agent n'est pas disponible, on passe à l'étape 314 dans laquelle la communication entre le client et l'agent courant est arrêtée, et la plate-forme de service 8 supprime l'entrée spécifique au terminal client 1 dans sa table d'état. Si l'autre agent est disponible, on passe à l'étape 315 dans laquelle la communication entre le client et l'agent courant est arrêtée, une nouvelle communication est établie entre le client et l'autre agent, et la plate-forme de service 8 maintient l'entrée spécifique au terminal client 1 dans l'état « en communication ».

S'il s'agit d'un transfert accompagné, on passe à l'étape 316 dans laquelle la plate-forme de service 8 met en attente le client (comme dans l'étape 304) : elle fournit le flux multimédia adapté au terminal client, et met à jour l'entrée spécifique au terminal client 1 dans sa table d'état, en remplaçant l'état « en communication » par l'état « en attente après communication préalable ».

Après l'étape 316 de mise en attente du client, la plate-forme de service 8 détecte dans l'étape 317 si le terminal client 1 se déconnecte du service pendant l'attente. Si c'est le cas, on passe à l'étape 318 qui est identique à l'étape 306 déjà décrite ci-dessus (suppression de l'entrée spécifique au terminal client 1 dans la table d'état).

Après l'étape 316 de mise en attente du client, la plate-forme de service 8 détecte dans l'étape 319 si l'autre agent vient de se libérer pour traiter l'appel du terminal client 1. Si c'est le cas, on passe à l'étape 320 dans laquelle la plate-forme de service 8 arrête la diffusion du flux streamé adapté vers le terminal client 1. Si le terminal client 1 était la dernière entité à recevoir le flux multimédia encodé de cette manière (c'est-à-dire avec ce codec), alors la plate-forme de service 8 arrête l'encodage dans ce format (elle continue en revanche à recevoir le flux multimédia venant du serveur de contenu 6). L'autre agent ouvre une session (c'est-à-dire établit une communication) avec le terminal client afin de traiter son appel. La plate-forme de service 8 est informée par l'autre agent de sa mise en relation avec le terminal client. Elle met alors à jour l'entrée spécifique au terminal client 1 dans sa table d'état, en remplaçant l'état « en attente après communication préalable » par l'état « en communication ».

Dans un mode de réalisation particulier de l'invention, la plate-forme de service 8 reçoit le flux multimédia d'un unique serveur de contenu. Dans ce cas, la plateforme de service a besoin d'un unique port qui sera donc destiné à être connecté à cet unique serveur de contenu.

## Revendications

1. Procédé de diffusion d'un flux depuis une plate-forme de service (8) vers au moins un terminal client (1), comprenant les étapes suivantes mise en oeuvre par la plate-forme de service:
- une étape de réception (301) d'un appel dudit terminal client; et
- une étape de mise en attente du terminal client
ladite étape de mise en attente comportant :
- une étape d'encodage (304) dans un format adapté au terminal client et sélectionné parmi au moins deux formats d'encodage distincts, d'un flux fourni à la plate-forme de service via une communication établie entre la plate-forme de service et un serveur de contenu (6), ledit encodage permettant d'obtenir un flux adapté au terminal client,
- une étape de transmission (304) du flux adapté au terminal client, via une communication établie entre la plate-forme de service et le terminal client.

2. Procédé selon la revendication 1, **caractérisé en ce qu'**il comprend les étapes suivantes, effectuées suite à la réception dudit appel:
- une étape de création (301) d'une entrée spécifique audit terminal client dans une table d'état, ladite entrée associant un identifiant dudit terminal client avec un état « en qualification » ;
- si un agent n'est pas disponible pour ledit appel après qualification dudit appel, une étape de modification (304) dans ladite table d'état de ladite entrée spécifique audit terminal client, en remplaçant ledit état « en qualification » par un état « en attente sans communication préalable »,
et **en ce que** ladite étape de mise en attente est mise en oeuvre lorsque le terminal client est dans l'état « en attente sans communication préalable ».

3. Procédé selon la revendication 2, **caractérisé en ce qu'**il comprend les étapes suivantes, mises en oeuvre si un agent est disponible après que l'entrée spécifique au terminal client a été mise dans l'état « en attente sans communication préalable » :
* une étape d'arrêt (308) de la transmission du flux adapté au terminal client, via la communication établie entre la plate-forme de service et le terminal client ;
* une étape d'établissement (308) d'une communication entre le terminal client et l'agent;
* une étape de modification (308) dans la table d'état de l'entrée spécifique au terminal client, en remplaçant l'état « en attente sans communication préalable » par un état « en communication ».

4. Procédé selon la revendication 3, **caractérisé en ce qu'**il comprend les étapes suivantes, mises en oeuvre si une communication établie entre le terminal client et un agent disponible est transférée vers un autre agent, après que l'entrée spécifique au terminal client a été mise dans l'état « en communication » :
* une étape de transmission (316) dudit flux adapté au terminal client, via une communication établie entre la plate-forme de service et le terminal client ;
* une étape de modification (316) dans la table d'état de l'entrée spécifique au terminal client, en remplaçant l'état « en communication » par un état « en attente après communication préalable».

5. Procédé selon la revendication 1, **caractérisé en ce que** l'étape (304) de transmission du flux adapté au terminal client est précédée d'une étape d'envoi au terminal client d'une requête contenant une adresse d'un port d'un serveur multimédia interactif, ledit port étant compris dans la plate-forme de service, port sur lequel le terminal client doit se connecter pour recevoir ledit flux adapté.

6. Plate-forme de service (8) comprenant
- des moyens de réception d'un appel d'un terminal client; et
- des moyens de mise en attente du terminal client, lesdits moyens de mise en attente du terminal client comportant:
- des moyens d'encodage dans un format adapté au terminal client et sélectionné parmi au moins deux formats d'encodage distincts, d'un flux fourni à la plate-forme de service via une communication établie entre la plate-forme de service et un serveur de contenu (6), ledit encodage permettant d'obtenir un flux adapté au terminal client,
- des moyens de transmission du flux adapté au terminal client, via une communication établie entre la plate-forme de service et le terminal client.

7. Plate-forme de service (8) selon la revendication 6 **caractérisé en ce qu'**elle comprend un unique port destiné à être connecté audit serveur de contenu.

8. Plate-forme de service (8) selon la revendication 7, **caractérisée en qu'**elle comporte:
- des moyens de création d'une entrée spécifique audit terminal client dans une table d'état, ladite entrée associant un identifiant dudit terminal client avec un état « en qualification », lesdits moyens étant mis en oeuvre suite à la réception d'un appel client,
- des moyens de modification dans ladite table d'état de ladite entrée spécifique audit terminal client, en remplaçant ledit état « en qualification » par un état « en attente sans communication préalable », lesdits moyens de modification étant mis en oeuvre si un agent n'est pas disponible pour ledit appel après qualification dudit appel,
- des moyens d'activation des moyens de mise en attente du terminal client lorsque le terminal est dans l'état « en attente sans communication préalable ».

9. Système de télécommunications comportant au moins un terminal client, un serveur de contenu, et une plate-forme de service selon l'une des revendications 6 à 8.

10. Programme d'ordinateur, comprenant des instructions pour l'exécution du procédé selon la revendication 1 lorsque ledit programme est exécuté sur un processeur.
